# NEUE EUROPÄISCHE PATENTSCHRIFT

(11) **EP 2 123 934 B2**
(45) Veröffentlichungstag und Bekanntmachung des Hinweises auf die Entscheidung über den Einspruch: **14.06.2023**
(45) Hinweis auf die Patenterteilung: 11.05.2016
(21) Anmeldenummer: 08009358.6
(22) Anmeldetag: 21.05.2008
(51) Int. Cl.: F16G 3/04

(54) **Verbindung von als Drahthaken ausgebildeten Gurtverbindern mit einem Gurt sowie Verfahren zur Herstellung dieser Verbindung**
Connection of wire-hook type belt connector with a belt and method of manufacturing this connection
Jonction de courroie à l'aide d'agrafes et procédé de fabrication de cette jonction

(43) Veröffentlichungstag der Anmeldung: 25.11.2009
(73) Patentinhaber: MATO GmbH & Co. KG, 63071 Offenbach am Main (DE)
(72) Erfinder: Herold, Wolfgang, 63075 Offenbach (DE)
(74) Vertreter: Franke, Markus

(56) Entgegenhaltungen:
- EP-A- 1 338 825
- EP-A2- 2 101 080
- WO-A-2007/025567
- WO-A1-03/031171
- DE-A1- 3 642 803
- DE-A1- 3 642 803
- DE-A1- 19 526 458
- DE-A1- 19 526 458
- DE-B- 1 245 908
- DE-B- 1 245 908
- DE-C- 732 524
- DE-C- 757 427
- DE-T2- 69 837 670
- US-A- 3 031 359
- US-A- 3 351 205
- US-A- 5 405 477
- US-A1- 2005 229 995

## Beschreibung

Die Erfindung betrifft eine Verbindung von als Drahthaken ausgebildeten Gurtverbindern mit einem Ende eines Gurts, wobei der jeweilige Drahthaken beidseitig des Gurts angeordnete Schenkel und sich an diese anschließende, in den Gurt eingepresste Hakenenden, sowie eine die beiden Schenkel verbindende Kupplungsöse aufweist, ferner mit einem flächigen Abdeckelement beidseitig des Gurts für die Hakenanordnung, das sich über die Breite des Gurts erstreckt, wobei das Abdeckelement ein Trägermaterial und eine auf dieses auf seiner dem Gurt zugewandten Seite aufgebrachte Schicht aus einem Thermoplast oder einem Kleber, insbesondere einem Heißkleber oder einem elastischen Kleber zum Befestigen des Abdeckelements am Gurt aufweist.

Die Erfindung betrifft ferner ein Verfahren zur Herstellung einer solchen Verbindung.

Eine Verbindung der eingangs genannten Art ist aus der WO 2007 025567 A1 bekannt. Dort sind die Drahthaken in einem streifenförmigen Trägermaterial aus einem Textilgewebe gefasst, das einseitig mit einem Kleber beschichtet oder einem Thermoplast ausgerüstet ist. Beim Anbringen der Verbindung wird durch Abgabe von Wärme über Pressbacken das Verschmelzen von Trägermaterial und Gurt bewirkt. Das Abdeckelement dient dem Abdecken der Drahthaken und des Gurtendes in diesem Bereich, um so zu verhindern, dass Drahthaken, insbesondere beschädigte Drahthaken, nachteilig auf das mittels des Gurtes geförderte Gut einwirken.

Eine Verbindung von als Drahthaken ausgebildeten Gurtverbindern mit einem Ende eines Gurtes unter Verwendung eines Abdeckelements, das sich über die Breite des Gurts erstreckt, ist ferner aus der EP 1 338 825 A1 bekannt. Dort ist der Gurt beispielsweise als Kunststoffgurt, insbesondere als Polyurethangurt ausgebildet. Das Abdeckelement ist als Gewebeband oder Kunststoff-Formteil ausgebildet und mit einer Klebeschicht, insbesondere einer Heißklebeschicht, oder einem elastischen Kleber versehen. Die Befestigung der Drahthaken am Gurt und das Anbringen des Abdeckelements erfolgt vorzugsweise in einem Arbeitsgang; hierbei wird das Abdeckelement mit den Schenkeln der Haken und dem Gurt verklebt, insbesondere unter Hitzeeinwirkung verklebt.

Ein Verfahren zum Einpressen von Drahthaken in ein aus Kunststoff bestehendes Flachgewebe ist aus der DE 36 42 803 A1 bekannt. Dort werden die Schenkel der Drahthaken vor dem Biegen erwärmt und unter teilweise Plastifizierung des Kunststoffs des Flachgewebes beim Zubiegen so zusammengepresst, dass in fertig gepresstem Zustand der Außenabstand der Schenkel an keiner Stelle größer ist als die Dicke des Flachgewebes.

In der DE-PS 732 524 ist eine Verbindung von als Drahthaken ausgebildeten Gurtverbindern mit einem Ende eines Gurtes beschrieben, wobei die Schenkel der Drahthaken in eine Gummideckschicht des Riemens eingebettet sind, wobei der Riemen aus einem Gewebekern und den Gummideckschichten besteht. Die Herstellung einer solchen Verbindung ist sehr aufwendig, weil zum Anbringen der Gummideckschichten eine Vulkanisierung erforderlich ist.

Aus der DE 100 29 571 A1 ist es bekannt, beim Herstellen von Bandverschlüssen an Bändern aus der Gruppe Siebbänder, Pressenbänder, Filterbänder, Transportbänder und Flachriemen das jeweilige Ende des Bandes in einem Werkzeug mit einem fliesfähigen und bei Abkühlung verfestigbaren Werkstoff zu umspritzen, der mit dem Band bei den gegebenen Zugkräften in Längsrichtung des Bandes eine untrennbare Verbindung eingeht. Jede Hälfte des Bandverschlusses ist mit alternierenden Vorsprüngen und Ausnehmungen versehen, wobei die Vorsprünge mit fluchtenden Kanälen zum Durchführen eines Schließbolzens versehen sind. Als fließfähige Werkstoffe finden Metalle, Kunststoffe wie Thermoplaste, Duroplaste und Kondensationsharze, insbesondere ein Polyorethan Verwendung. Als Bandwerkstoff finden gewebte, gewirkte, gelegte, homogene und geschichtete Bänder aus Textilen, metallischen Werkstoffen, Kunststoffen und Metallgeweben Verwendung. Die Herstellung eines solchen Bandverschlusses ist sehr aufwendig, insbesondere zeitlich sehr aufwendig.

Zum Entwässern von Suspensionen finden Vorrichtungen Verwendung, beispielsweise gemäß der EP 0 682 645 B1, die Gurte aufweisen, die durch ein Filtergewebe gebildet sind. Im Filtergewebe sind Hohlräume gebildet, durch die die Suspension entwässert werden kann. Bei einer solchen Suspension handelt es sich beispielsweise um Schlamm. Es finden zwei Fördergurte Verwendung, die in relativ geringem Abstand zueinander angeordnet sind und zwischen sich, während der Förderung, die Suspension pressen, so dass die Entwässerung durch die Hohlräume der Gurte stattfindet.

Derartige Vorrichtungen finden beispielsweise auch zur Gewinnung von Frucht- und Gemüsesäften, Biertreber-Entwässerung, zur Herstellung von Algen- und Kräuterextrakten Verwendung. Durch Pressen der Produkte zwischen Förderbändern, die durch Filtergewebe gebildet sind, wird die Flüssigkeit abgefördert.

Bei derartigen Vorrichtungen ist es erforderlich, den Filterkuchen nach der Entwässerung abzufördern. Dies geschieht mittels Abstreifern, die den umlaufenden Gurt kontaktieren. Von den Abstreifern werden somit auch diejenigen Bereiche der Gurte kontaktiert, in denen sich die Gurtverbinder bzw. deren Abdeckungen befinden. Dieser Bereich ist einem erhöhten Verschleiß unterworfen, insbesondere dann, wenn Gut gefördert wird, das abrasive Teile, beispielsweise Sandpartikel aufweist.

Aufgabe der vorliegenden Erfindung ist es, bei einer Verbindung der eingangs genannten Art eine dauerhafte und verschleißfeste Befestigung des Abdeckelements am Gurt zu gewährleisten. Aufgabe ist es ferner, ein Verfahren anzugeben, das auf besonders einfache Art und Weise das Verbinden der Drahthaken mit dem Gurt und die dauerhafte und verschleißfeste Befestigung des Abdeckelements am Gurt gewährleistet. Die Verbindung soll in kurzer Zeit herstellbar sein.

Gelöst wird die Aufgabe durch eine Verbindung, die die Merkmale des Patentanspruchs 1 aufweist.

Die Erfindung macht sich den Umstand zu Nutze, dass bei einer Ausbildung des Gurtes zum Zwecke der Durchführung von Filtervorgängen mittels des Gurtes der Gurt als Filtergurt ausgebildet ist. Der Gurt ist beispielsweise als Gewebegurt mit Kett- und Schussfäden versehen, die zwischen sich Hohlräume bilden, durch die flüssige Anteile des zu filternden Produkts durch den Gurt hindurchtreten können. Ein Hindurchtreten ist im Bereich der Gurtenden, dort wo die Drahthaken mit dem Gurt zu verbinden sind, nicht erforderlich. Dort wird die Abdeckung angebracht. Deren auf das Trägermaterial aufgebrachte Schicht verformt sich beim Erwärmen und Anbringen des Abdeckelements derart, dass sie die Hohlräume des Filtergurts durchsetzt. Es findet somit eine formschlüssige Verbindung zwischen aufgebrachter Schicht und Filtergewebe statt, indem sich die verformte aufgebrachte Schicht in die Hohlräume des Filtergurts hinein erstreckt, sich somit im Wesentlichen senkrecht zur Auflagefläche des Filtergurts für das zu filternde Produkt erstreckt. Die Abdeckung ist damit hervorragend geeignet, Kräfte aufzunehmen, die in Zugrichtung des Gurtes wirksam sind, da, bezogen auf diese Richtung, der Formschluss zwischen aufgebrachter Schicht und Filtergurt kraftübertragend wirksam ist. Diese Anordnung trägt wesentlich zur Schaffung der dauerhaften und verschleißfesten Befestigung des Abdeckelements am Gurt bei.

Die aufgebrachte Schicht durchsetzt beidseitig des Gurts Hohlräume des Filtergurts. Sie deckt somit die Drahthaken im Bereich beider Schenkel ab. Besonders vorteilhaft ist es, wenn die aufgebrachte Schicht in den Bereichen dieser Schicht, die oberhalb und unterhalb des Gurts angeordnet sind, somit beidseitig des Gurts angeordnet sind, im Bereich der Hohlräume miteinander verschmolzen ist. In diesem Fall ist auf der jeweiligen Seite des Gurts die aufgebrachte Schicht nicht nur so weit verformt, dass sie in die Hohlräume des Filtergurts hineinragt, sondern es ragen die in denselben jeweiligen Hohlraum des Filtergurts hineinragenden Bereiche der aufgebrachten Schicht so weit in diesen Hohlraum, dass, beim Anbringen der Verbindung, unter Einwirkung von Wärme und beiderseitiger Presskraft, diese in den Hohlraum hineinragenden Bereiche der aufgebrachten Schicht miteinander verschmelzen. Es findet dort also eine Verbindung der Bereiche der aufgebrachten Schicht statt, die nach deren Erkalten fest ist. Die beidseitig des Gurts angeordneten Bereiche des Abdeckelements sind somit über deren aufgebrachten Schichten durch die Hohlräume des Gurts miteinander fest verbunden.

Der Gurt besteht vorzugsweise aus Kunststoff, Metall oder einem Vliesstoff, konkret einem Filz, insbesondere aus Kunststoff. Bei der Bildung des Gurtes aus Kunststoff wird es als besonders vorteilhaft angesehen, wenn dieser aus Polyester oder Nylon besteht. Besonders gute Filtereigenschaften bei einfachster Gestaltung des Gurtes ergeben sich, wenn der Gurt ein Filtergewebe ist. Dieses besteht insbesondere aus monofilen Fäden und/oder gesponnenen Fäden.

Der Gurt, insbesondere das Gewebe hat vorzugsweise einen Schmelzpunkt, der höher, insbesondere deutlich höher ist als der Schmelzpunkt der aufgebrachten Schicht. Der Schmelzpunkt der aufgebrachten Schicht liegt beispielsweise bei 180°C, der Schmelzpunkt des Gewebes bei 220°C. Dies bedeutet, dass dann, wenn die aufgebrachte Schicht geschmolzen ist, sich insbesondere in einem teigigen Zustand befindet, das Gewebe den Schmelzpunkt nicht erreicht hat. Dies ist von besonderer Bedeutung, weil zu verhindern ist, dass sich der Gurt durch Erreichen der Schmelztemperatur verformt und nach dem Erkalten in diesem verformten Zustand verbleibt. Eine Verformung ist nachteilig unter dem Aspekt der Führung des Gurts über Umlenkrollen für den Gurt, ferner ist eine Verformung des Gurts nachteilig für dessen Zugeigenschaften.

Der Gurt ist insbesondere durch ein Filtergewebe aus monofilen Fäden und/oder gesponnenen Fäden gebildet. In einer Richtung finden beispielsweise monofile Fäden, in der anderen Richtung multiphile Fäden Verwendung.

Unter dem Aspekt der Verbesserung der Verschleißfestigkeit der Verbindung wird es als besonders vorteilhaft angesehen, wenn mit dem Abdeckelement auf dessen dem Gurt abgewandten Seite ein weiteres Abdeckelement verbunden ist. Dieses weitere Abdeckelement verstärkt die Schichtdicke der Abdeckschicht, die durch die beiden Abdeckelemente gebildet ist. In aller Regel bestehen die Abdeckelemente aus demselben Material. Sie weisen das Trägermaterial und die auf dieses aufgebrachte Schicht auf. Mittels der aufgebrachten Schicht des weiteren Abdeckelements wird dieses am Trägermaterial des unmittelbar am Gurt befestigten Abdeckelements befestigt.

Vorzugsweise erstreckt sich die weitere Abdeckung in Längsrichtung des Gurts über die Endbereiche der anderen Abdeckung hinaus, somit derjenigen Abdeckung, die unmittelbar den Gurt abdeckt. Aufgrund dieser Gestaltung ergibt sich beim Umlauf des Gurtes eine Anlaufschräge des weiteren Abdeckelements, ausgehend vom Gurt, womit über diese Schräge die Dicke der doppelt liegenden Abdeckelemente nicht als Stufe dargestellt ist.

Bezüglich der Abdeckung und/oder weiteren Abdeckung wird es als besonders vorteilhaft angesehen, wenn deren Trägermaterial durch ein Gewebe gebildet ist. Während insbesondere das Gewebe des Gurtes zum Erzielen der Filtereigenschaft großmaschig ausgebildet ist, ist das Gewebe für die Abdeckung und/oder die weitere Abdeckung insbesondere engmaschig gestaltet. Allerdings sollte dieses Gewebe auch, wenn auch nur gering dimensioniert, Hohlräume aufweisen, durch die beim Verbinden der beiden Abdeckelemente die aufgebrachte Schicht des weiteren Abdeckelements durch die Hohlräume des Trägerelements des mit dem Gurt verbundenen Abdeckelements hindurchdringen kann, um so eine formschlüssige Verbindung mit dem Trägermaterial der mit dem Gurt verbundenen Abdeckung einzugehen oder gar eine körperliche Verbindung der beiden aufgebrachten Schichten der Abdeckelemente herbeizuführen.

Um bei der Plastifizierung der beiden jeweiligen aufgebrachten, insbesondere thermoplastischen Schichten eine Plastifizierung des Trägermaterials der Abdeckung und/oder der weiteren Abdeckung zu verhindern, sollte der Schmelzpunkt des Trägermaterials höher liegen als der Schmelzpunkt der aufgebrachten Schicht. Das Trägermaterial der Abdeckung und/oder der weiteren Abdeckung besteht insbesondere aus Polyester oder Nylon. Das Trägermaterial der Abdeckung und/oder der weiteren Abdeckung ist vorzugsweise durch ein Gewebe aus monofilen Fäden und/oder gesponnenen Fäden gebildet.

Das Abdeckelement kann die Schenkel der Drahthaken vollständig oder auch nur teilweise abdecken. Das Abdeckelement und/oder die Hakenanordnung erstreckt sich insbesondere über die gesamte Breite des Gurts. Die Breite des Gurts kann recht groß sein, beispielsweise bis zum 3m betragen.

Gelöst wird die Aufgabe ferner durch ein Verfahren das die Merkmale des Patentanspruchs 11 aufweist.

Insbesondere dient das Verfahren zur Herstellung der gemäß der vorgenannten Lösung spezifizierten Verbindung.

Die Plastifizierung des aufgebrachten Materials der Abdeckung kann durch verschiedene Methoden, wie zum Beispiel Reibung, Strahlung, Ultraschall, Heizplatten, Heißluft und dgl. erreicht werden.

Vorzugsweise erfolgt das Einpressen der Drahthaken bei einem Druck von 15 bis 35 N/mm² und/oder das Aufheizen des Abdeckelements bei einem Druck von 0,2 bis 0,6 N/mm² und/oder das Pressen des platifizierten Materials der Schicht in die Hohlräume bei einem Druck von 5 bis 25 N/mm².

Die Erfindung schlägt somit eine Verbindung von als Drahthaken ausgebildeten Gurtverbindern mit einem Ende eines Filtergurts unter Verwendung eines Abdeckelements sowie ein Verfahren zur Herstellung der Verbindung vor, wobei insbesondere
- das Produkt aus der Schichtdicke des aufgebrachten Materials der Abdeckung und der Fläche in etwa (mindestens) dem Volumen der Hohlräume des Filtergurts entspricht,
- die Schichtdicke des aufgebrachten Materials der Abdeckung so gewählt wird, dass die Schicht der Oberseite mit der Schicht der Unterseite beim Herstellen der Verbindung unter Hitzeeinwirkung miteinander verschmilzt,
- ein ausreichender Verschleißschutz erreicht wird, indem mehrere, durch aufgebrachte Schichten miteinander verbundene Gewebelagen übereinander angeordnet sind,
- ein ausreichender Verschleißschutz durch die Verwendung eines relativ dicken Gewebes mit teilweise monofilen Fäden erreicht wird,
- dass nach dem Einpressen der Verbinder mit der Abdeckung diese in einer separaten Station unter relativ geringem Druck aufgeheizt werden und sofort danach in einer weiteren Station unter relativ hohem Druck plastifiziertes aufgebrachtes Material der Abdeckung in die Hohlräume des Filtergurts gepresst und abgekühlt wird.

Bei dem aufgebrachten Material handelt es sich insbesondere um einen Thermoplast, bei dem Filtergurt um einen Gewebegurt aus Kunststoff.

Weitere Merkmale der Erfindung sind in den Unteransprüchen, der Beschreibung der Figuren und den Figuren selbst dargestellt, wobei bemerkt wird, dass alle Einzelmerkmale und alle Kombinationen von Einzelmerkmalen erfindungswesentlich sind.

In den Figuren ist die Erfindung anhand mehrerer Ausführungsbeispiele dargestellt, ohne hierauf beschränkt zu sein.

Es zeigt:
- Figur 1: für eine erste Ausführungsform der Erfindung eine Seitenansicht einer in ein Abdeckelement eingesetzten, mittels eines Querdrahtes gefassten Anordnung von Drahthaken, wobei mit dem Abdeckelement ein weiteres Abdeckelement verbunden ist,
- Figur 2: für eine zweite Ausführungsform der Erfindung eine Seitenansicht einer in ein Abdeckelement eingesetzten, mittels eines Querdrahtes gefassten Anordnung von Drahthaken,
- Figur 3: für die Ausführungsform nach Figur 1 einen Längsschnitt durch die Anordnung von Gurt und mit diesem verbundenen Drahthaken sowie die Schenkel der Drahthaken und die den Gurt abdeckenden Abdeckelemente,
- Figur 4: eine Ansicht IV der Anordnung gemäß Figur 3,
- Figur 5: eine Vorrichtung zum Einpressen der vom Abdeckelement aufgenommenen und in der Vorrichtung gehaltenen Drahthaken in ein Gurtende, vor dem Pressvorgang,
- Figur 6: eine Darstellung gemäß Figur 5, für den Zustand der in das Gurtende eingepressten Drahthaken und der beim Einpressen der Drahthaken an den Gurt angelenkten Abdeckelemente, bei beheizten separaten Heizbacken, vor dem Andrücken der Heizbacken an das Abdeckelement,
- Figur 7: die verfahrensgemäßen Schritte des Pressens, anschließenden Heizens, anschließenden Nachpressens.

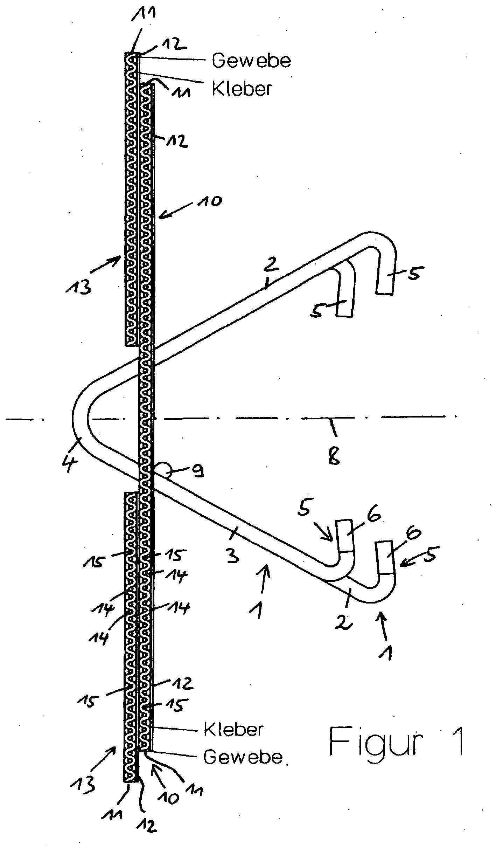

Die Figuren 1, 3 und 4 zeigen für die erste Ausführungsform eine Anordnung mit einer Vielzahl von Drahthaken 1. Jeder Drahthaken 1 weist einen langen Schenkel 2 und einen kurzen Schenkel 3 auf, sowie eine Kupplungsöse 4, die die beiden Schenkel 2 und 3 miteinander verbindet. Das freie Ende des jeweiligen Schenkels 2 bzw. 3 ist, bezogen auf den jeweils anderen Schenkel, als auf diesen zu gerichteter Hakenabschnitt 5 mit Spitze 6 ausgebildet. Mehrere Drahthaken 1, im Ausführungsbeispiel acht Drahthaken 1, bilden eine Hakenanordnung 7, wobei der jeweils nächstfolgende Drahthaken 1, bezogen auf die in Figur 1 gezeigte Achse 8, um 180° gedreht angeordnet ist.

Die bezogen auf die Orientierung nach Figur 1 unteren Schenkel 2 und 3 der Hakenanordnung 7 sind im Übergang zur Kupplungsöse 4 mittels eines Querdrahtes 9 gefasst. Über den Querdraht 9 sind die Drahthaken 1 somit definiert zueinander positioniert. Die gezeigte Hakenanordnung 7 ist in ein plattenförmiges Abdeckelement 10 eingesetzt. Dieses weist eine rechteckige Hauptfläche auf, wobei der Querdraht 9 parallel zu den Längskanten des Abdeckelements 10 orientiert ist. Das Abdeckelement ist, wie beispielsweise das Abdeckelement gemäß der EP 1 338 825 A1 gestaltet. Es ist vorliegend mit acht parallelen Schlitzen versehen, wobei jeder Schlitz der Aufnahme eines der Drahthaken 1 im Bereich der Kupplungsösen 4 dient. Entsprechend sind die Schlitze parallel zu den Schmalkanten des Abdeckelements 10 orientiert. Der jeweilige Schlitz ist nur so lang, dass er den Drahthaken 1 in seinem dem Querdraht 9 benachbarten Bereich aufnehmen kann. Grundsätzlich kann auf einen Querdraht 9 verzichtet werden, insbesondere wenn das Abdeckelement 10 ausreichend steif ist, um die Drahthaken 1 aufzunehmen und zu positionieren.

Das Abdeckelement 10 ist symmetrisch zur Achse 8 angeordnet. Es besteht aus einem Trägermaterial 11 und eine dieses abdeckenden thermoplastischen Schicht 12. Die thermoplastische Schicht dient somit in noch näher zu beschreibender Art und Weise der Verbindung des Abdeckelements 10 mit einem Ende eines Fördergurts. Bei dem Gewebe des Trägermaterials 11 handelt es sich beispielsweise um ein solches, das aus monofilen Fäden - Kett- und Schussfäden - gebildet ist. Dieses Trägermaterial 11 besteht beispielsweise aus Polyester oder Nylon. Bei der thermoplastischen Schicht 12 handelt es sich beispielsweise um eine solche, die aus Polyurethan besteht.

Das Abdeckelement 10 ist durch ein weiteres Abdeckelement 13, das zweiteilig ist, gebildet. Dieses weitere Abdeckelement 13 entspricht bezüglich Aufbau und Materialpaarung dem Abdeckelement 10. Im Bereich der freien Enden des Abdeckelements 10, bezogen auf die Achse 8, erstreckt sich das weitere Abdeckelement 13 über das Abdeckelement 10 hinaus. Das weitere Abdeckelement 13 ist im Bereich dessen thermoplastischen Schicht 12 mit dem Trägermaterial 11 des Abdeckelements 10 verbunden. Der jeweilige Abschnitt des weiteren Abdeckelements 13 reicht bis nahezu zur Kupplungsöse 4 des jeweiligen Drahthakens 1.

Das Trägermaterial 11 des jeweiligen Abdeckelements 10 bzw. 13 ist engmaschig gewebt, so dass zwischen den Kettfäden 14 und den Schussfäden 15 des Trägermaterials 11 nur geringe Hohlräume verbleiben.

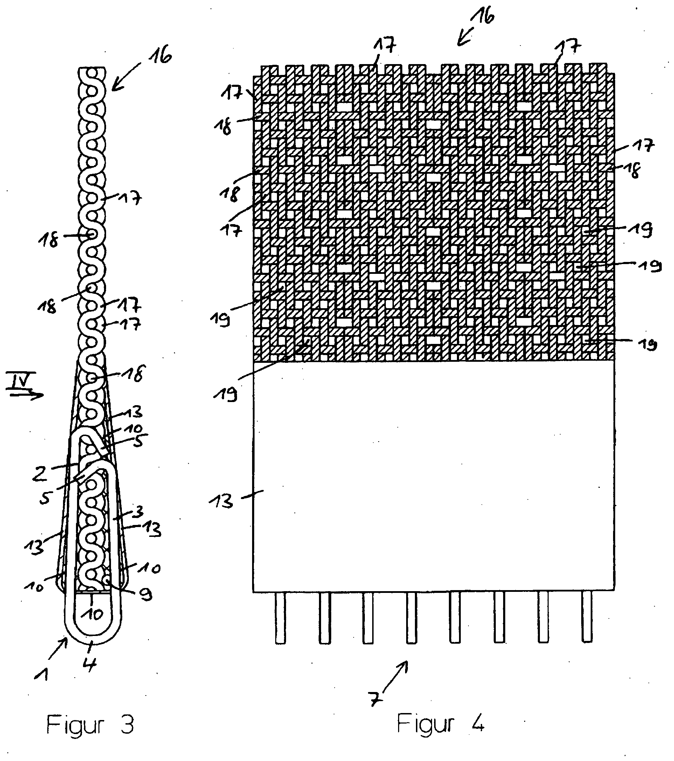

Die Figuren 3 und 4 veranschaulichen die an einem Ende eines Fördergurtes 16 angebrachte Hakenanordnung 7. Der Gurt ist durch ein Filtergewebe gebildet, das aus Polyester oder Nylon besteht. Die Kettfäden 17 und Schussfäden 18 des Filtergewebes des Fördergurts 16 sind relativ weitmaschig gewebt, um die Funktion des Filtergurts zu gewährleisten, womit zwischen den Kettfäden 17 und den Schussfäden 18 eine Vielzahl von Hohlräumen 19 gebildet sind, die in der Darstellung der Figur 4 nicht strichliert veranschaulicht sind und den Fördergurt 16 senkrecht zu dessen Förderebene durchsetzen. Diese Hohlräume 19 dienen der Verankerung des Abdeckelements 10 im Sinne einer formschlüssigen Verbindung.

Figur 3 veranschaulicht die mit dem Gurtende verbundenen Drahthaken 1, verdeutlicht für einen der Drahthaken und die die Drahthaken 1 abdeckenden Abdeckelemente 10 und 13, wobei die thermoplastische Schicht 12 des Abdeckelementes 10 aufgrund plastischer Verformung in die Hohlräume 19 ragt und dies auch für die über das Abdeckelement 10 hinausreichenden Bereiche des Abdeckelements 13, die mit dem Fördergurt 16 in Kontakt gelangen, der Fall ist. Durch diesen Formschluss der thermoplastischen Schicht 12 mit dem Fördergurt 16 im Bereich der Hohlräume 19 ist eine dauerhafte Verbindung zwischen Abdeckelement 10 bzw. überlappendem Bereich des Abdeckelements 13 mit dem Fördergurt 16 geschaffen, wobei die Abdeckelemente auch die Drahthaken 1 abdecken, wie es in den Figuren 3 und 4 gezeigt ist. Hierbei sollte das Produkt aus der Schichtdicke des thermoplastischen Materials der Abdeckung und der Fläche in etwa, insbesondere mindestens dem Volumen der Hohlräume des jeweiligen Filtergewebes entsprechen. Die Schichtdicke des thermoplastischen Materials in der Abdeckung wird insbesondere so gewählt, dass die Schicht der Oberseite des Gurts mit der Schicht der Unterseite des Gurts beim Herstellen der Verbindung unter Hitzeeinwirkung miteinander verschmilzt. Dies bedeutet, dass die thermoplastische Schicht 12 von jeder Seite des Gurts aus verformt wird, so dass, bezogen auf den jeweiligen Hohlraum 19, von beiden Enden des Hohlraums der Thermoplast in diesen eintritt und die Thermoplaste sich in etwa auf halber Länge des Hohlraums 19 miteinander verbinden.

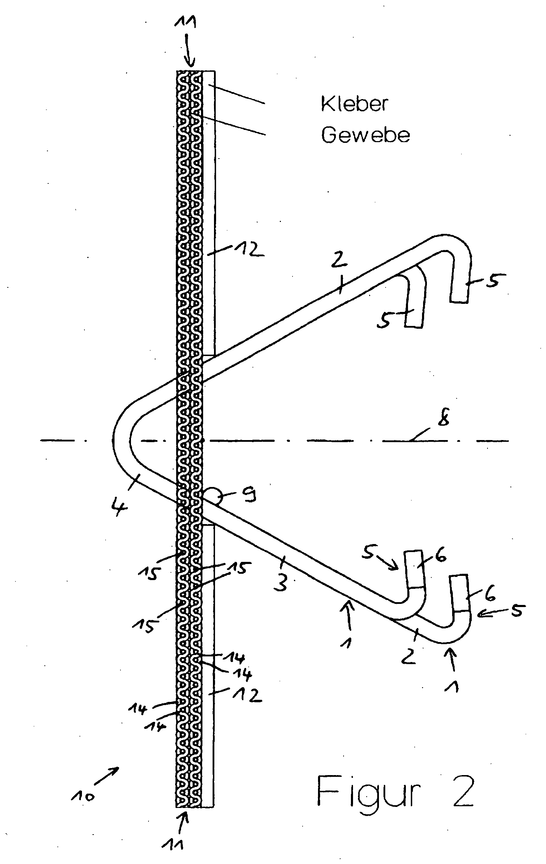

Figur 2 zeigt eine weitere Ausführungsform, die sich von derjenigen nach Figur 1 dadurch entscheidet, dass nur das Abdeckelement 10 vorgesehen ist, das aber ein eine Einheit bildendes doppellagiges Trägermaterial aufweist, das auf einer Seite mit der thermoplastischen Schicht 12 versehen ist. Dieses doppellagige Trägermaterial 11 ist entsprechend dem Trägerelement 11 zur ersten Ausführungsform nach den Figuren 1, 3 und 4 gestaltet, somit mit Kettfäden 14 und Schussfäden 15. Die erhöhte Lagendicke wird bei der Ausführungsform nach der Figur 2 somit, im Unterschied zu der Ausführungsform nach der Figur 1, durch die doppelte Lagendicke ohne zwischen den Lagen angeordneter thermoplastischer Schicht 12 erzeugt. Im übrigen sind keine überlappenden Bereiche der Trägermaterialien, wie bei der Ausführungsform nach Figur 1, vorgesehen.

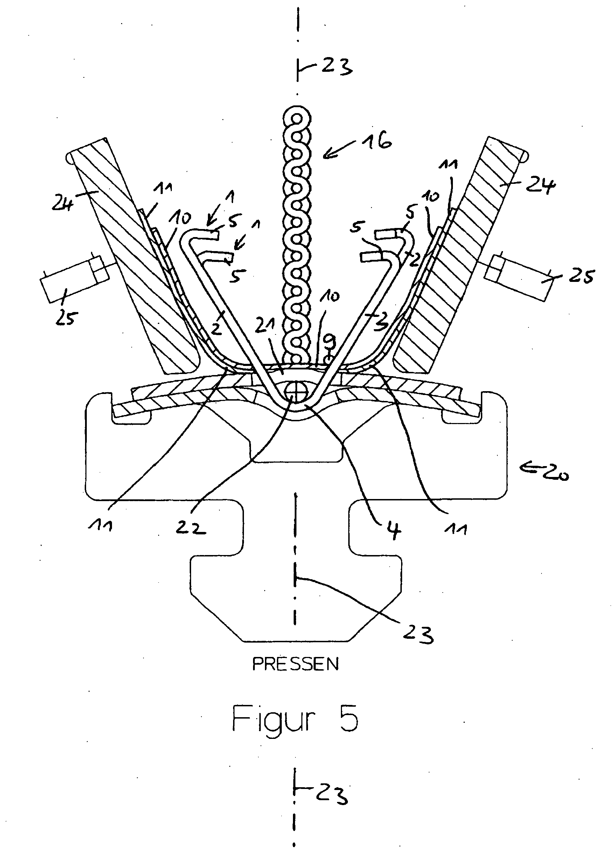

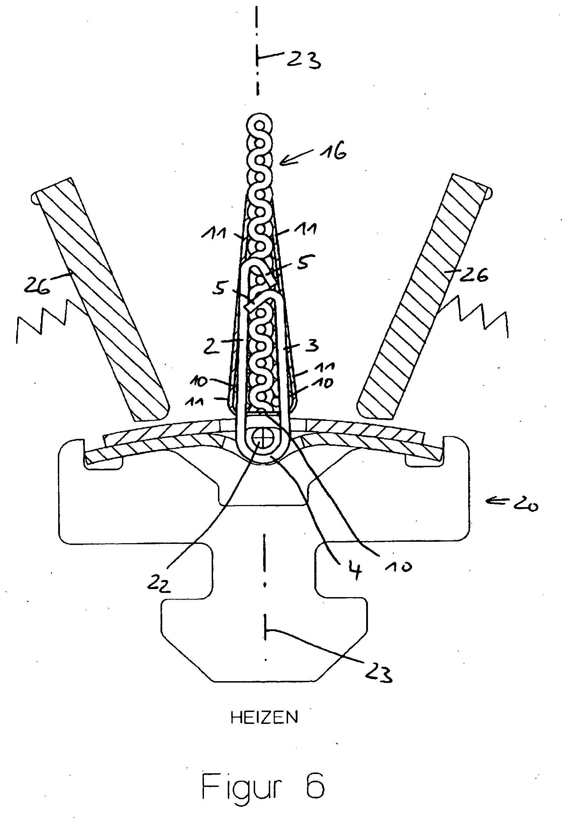

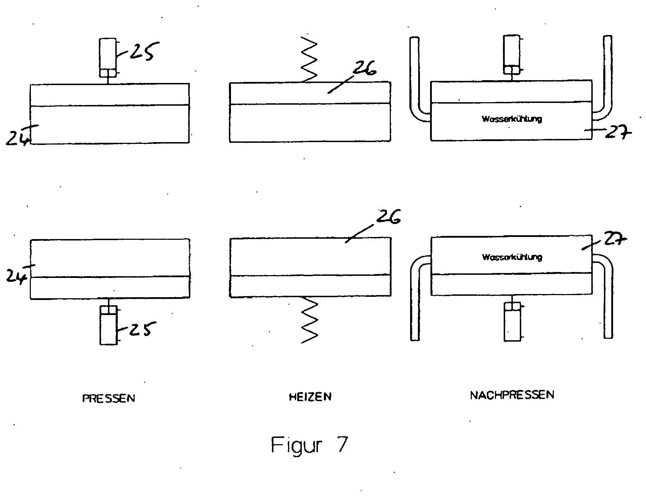

Die Figur 5 veranschaulicht einen Verfahrensschritt beim Anbringen der Drahthaken 1 am Ende des Fördergurts 16. Die Hakenanordnung 7 ist in einer Vorrichtung 20 gehalten, wie sie in der EP 1 338 825 A1 beschrieben ist. Schlitze 21 in der Vorrichtung nehmen die Drahthaken 1 im Bereich der Kupplungsösen 4 auf und es fixiert ein in der Vorrichtung 20 gehaltener Stab 22 die Hakenanordnung 7. Symmetrisch zur Achse 23 der Vorrichtung sind Pressbacken 24 angeordnet, die mittels Kraftmitteln 25 in Richtung der Achse 23 zustellbar sind. Die mittels des Querdrahtes 9 gefassten Drahthakens 1, die die Schlitze in den Abdeckelement 10 durchsetzen, werden in die Vorrichtung 20 eingesetzt und mittels des Stabes 20 fixiert. Zwischen die geöffneten Schenkel 2 und 3 der Drahthaken 1 wird in der Achse 23 das Ende des Fördergurts 16 eingesetzt, bis das freie Ende des Fördergurts 16 das an der Vorrichtung anliegende Abdeckelement 10 kontaktiert. Dann werden, in kaltem Zustand, die Drahthaken eingepresst und bei diesem Einpressvorgang die Abdeckelemente 10 und 13 vorfixiert. Hierbei stellt sich die in Figur 6 gezeigte Situation der Verbindung von Drahthaken 1 und Fördergurt 16 ein. Während der Pressvorgang des Einpressens der Drahthaken bei sehr hohem Druck (15 bis 35 N/mm²) erfolgt, geschieht der nachfolgende Heizvorgang bei relativ geringem Druck (0,2 bis 0,6 N/mm²). Dieser Heizvorgang erfolgt in einer separaten Station, somit nicht der in Figur 5 gezeigten Pressstation, vorzugsweise in einer neben der Pressstation angeordneten Station gemäß Figur 6, die eine entsprechende Vorrichtung 20 aufweist. Dieser Station sind Heizbacken zugeordnet, die in Richtung der Achse 23 zustellbar sind. Die Heizbacken 26 werden mit relativ geringem Druck, ausgehend aus der Stellung in Figur 6, gegen das Abdeckelement 13 beidseitig des Fördergurts 16 gefahren und es werden die Abdeckelemente 13 und 10 so weit aufgeheizt, bis deren thermoplastische Schichten 12 teigig bis flüssig werden. Es wird dann, wie der Figur 7 zu entnehmen ist, die links und in der Mitte die Press- und Heizstation gemäß der Figuren 5 und 6 veranschaulicht, unmittelbar nach dem Heizen gemäß Figur 6 in einer weiteren entsprechenden Station, die ähnlich der Station in Figur 5 aufgebaut ist, mittels Pressbacken 27 unter gegenüber dem Heizdruck relativ hohem Druck (5 bis 25 N/mm²), allerdings wesentlich geringerem Druck als dem Pressdruck zum Einpressen der Drahthaken, das plastifizierte thermoplastische Material der Abdeckelemente 10 und 13 in die Hohlräume 19 des Filtergewebes des Fördergurts 16 gepresst und unmittelbar nach dem Pressen die thermoplastischen Schichten 12 abgekühlt, beispielsweise durch Kühlen der Pressbacken. In dem Bereich in dem das Abdeckelement 13 das Abdeckelement 10 abdeckt, dringt das plastifizierte thermoplastische Material 12 des Abdeckelementes 13 in die relativ kleinen Hohlräume des Trägermaterials 11 ein.

Bei dem erfindungsgemäßen Verfahren erfolgt das Aufheizen der thermoplastischen Schicht 12 nur bis zu deren Schmelzpunkt, der beispielsweise bei 180°C liegt. Dieser Schmelzpunkt liegt deutlich unter dem Schmelzpunkt des Gewebes des Fördergurts 16, der beispielsweise bei 220°C liegt. Hierdurch ist sichergestellt, dass beim Plastifizieren der thermoplastischen Schicht 12 sich der Fördergurt 16 nicht mit verformt. Die Verbindung zwischen thermoplastischer Schicht 12 und Fördergurt 16 erfolgt durch Formschluss im Bereich der Hohlräume 19, bei weitergehender Plastifizierung durch Verbindung der beidseitigen thermoplastischen Schichtbereiche, die von unterschiedlichen Enden in denselben jeweiligen Hohlraum 19 eindringen.

Durch diese besondere formschlüssige Verbindung, insbesondere des Trägermaterials 11 mit dem Fördergurt 16, ergibt sich eine wesentlich höhere Ausreißfestigkeit der Gurtverbindung, abgesehen von der großen Haltbarkeitsdauer und großen Verschleißfestigkeit der Verbindung.

Unabhängig von den in der Figurenbeschreibung verdeutlichten Ausführungsformen, bei denen thermoplastische Schichten vorgesehen sind, kann anstatt eines Thermoplast ein Kleber, insbesondere ein Heißkleber oder ein elastischer Kleber Verwendung finden.

## Patentansprüche

1. Verbindung von als Drahthaken (1) ausgebildeten Gurtverbindern mit einem Ende eines Gurts (16), wobei der jeweilige Drahthaken (1) beidseitig des Gurts (16) angeordnete Schenkel (2, 3) und sich an diese anschließende, in den Gurt (16) eingepresste Hakenenden (5), sowie eine die beiden Schenkel (2, 3) verbindende Kupplungsöse (4) aufweist, ferner mit einem flächigen Abdeckelement (10) beidseitig des Gurts (16) für die Hakenanordnung (7), das sich über die Breite des Gurts (16) erstreckt, wobei das Abdeckelement (10) durch ein Trägermaterial (11) und eine auf dieses auf seiner dem Gurt (16) zugewandten Seite aufgebrachte Schicht (12) aus einem Thermoplast oder einem Kleber, insbesondere einem Heißkleber oder einem elastischen Kleber zum Befestigen des Abdeckelements (20) am Gurt (16) aufweist, **dadurch gekennzeichnet, dass** der Gurt (16) als Filtergurt ausgebildet ist und die aufgebrachte Schicht (12) beidseitig des Gurts (16) Hohlräume (19) des Gurts (16) durchsetzt, wobei die aufgebrachte Schicht (12) in den Bereichen der aufgebrachten Schicht (12), die beidseitig des Gurts (16) angeordnet sind, im Bereich der Hohlräume (19) miteinander verbunden ist.

2. Verbindung nach Anspruch 1, **dadurch gekennzeichnet, dass** der Gurt (16) aus Kunststoff, Metall oder Vliesstoff (Filz) besteht.

3. Verbindung nach Anspruch 1 oder 2, **dadurch gekennzeichnet, dass** der Gurt (16) aus Polyester oder Nylon gebildet ist.

4. Verbindung nach Anspruch 1 bis 3, **dadurch gekennzeichnet, dass** der Gurt (16) durch ein Filtergewebe gebildet ist, insbesondere das Filtergewebe aus monofilen Fäden und/oder gesponnenen Fäden gebildet ist.

5. Verbindung nach einem der Ansprüche 1 bis 4, **dadurch gekennzeichnet, dass** die aufgebrachte Schicht (12) in den Bereichen der aufgebrachten Schicht (12), die beidseitig des Gurts (16) angeordnet sind, im Bereich der Hohlräume (19) miteinander verschmolzen ist.

6. Verbindung nach einem der Ansprüche 1 bis 5, **dadurch gekennzeichnet, dass** mit dem Abdeckelement (10) auf dessen dem Gurt (16) abgewandten Seite ein weiteres Abdeckelement (13) verbunden ist.

7. Verbindung nach Anspruch 6, **dadurch gekennzeichnet, dass** das weitere Abdeckelement (13) sich in Längsrichtung des Gurts (16) über die Endbereiche des anderen Abdeckelements (13) erstreckt.

8. Verbindung nach einem der Ansprüche 1 bis 7, **dadurch gekennzeichnet, dass** das Trägermaterial (11) des Abdeckelements (10) und/oder des weiteren Abdeckelements (13) durch ein Gewebe gebildet ist, das insbesondere aus monofilen Fäden und/oder gesponnenen Fäden gebildet ist.

9. Verbindung nach einem der Ansprüche 1 bis 8, **dadurch gekennzeichnet, dass** das Trägermaterial (11) des Abdeckelements (10) und/oder des weiteren Abdeckelements (13) aus Polyester oder Nylon besteht.

10. Verbindung nach einem der Ansprüche 1 bis 9, **dadurch gekennzeichnet, dass** die thermoplastische Schicht aus Polyurethan besteht.

11. Verfahren zur Herstellung einer Verbindung von als Drahthaken (1) ausgebildeten Gurtverbindern, mit einem Ende eines Gurts (16), wobei der jeweilige Drahthaken (1) beidseitig des Gurts (16) anordbare Schenkel (2, 3) und sich an diese anschließende, in den Gurt (16) einpressbare Hakenenden (5), sowie eine die beiden Schenkel (2, 3) verbindende Kupplungsöse (4) aufweist, ferner mit einem beidseitig des Gurts (16) anordbaren, flächigen Abdeckelement (10) für die Hakenanordnung (7), das sich über die Breite des Gurts (16) erstreckt, wobei das Abdeckelement (10) durch ein Trägermaterial (11) und eine auf dieses auf seiner dem Gurt (16) zugewandten Seite aufgebrachte Schicht (12) aus einem Thermoplast oder einem Kleber zum Befestigen des Abdeckelements (20) am Gurt (16) aufweist, insbesondere Verfahren zur Herstellung einer Verbindung nach einem der Ansprüche 1 bis10, **dadurch gekennzeichnet, dass** die in dem Abdeckelement (10) gehaltenen Drahthaken (10) in einen als Filtergurt ausgebildeten Gurt (16) eingepresst werden, dann die aufgebrachte Schicht (12) aufgeheizt wird und plastifiziertes Material der Schicht (12) unter Druck mit dem Filtergurt (16) verbunden wird, wobei nach dem Einpressen der Drahthaken (1) in den Filtergurt (16) und dem anschließenden Aufheizen der aufgebrachten Schicht (12) das plastifizierte Material der Schicht (12) unter Druck in Hohlräume (19) des Filtergurts (16) gepresst wird, wobei nach dem Einpressen der Drahthaken (1) mit dem Abdeckelement (10) das Abdeckelement (10) in einer separaten Station unter relativ geringem Druck aufgeheizt wird und sofort danach, in einer weiteren Station unter relativ hohem Druck, plastifiziertes Material der Schicht (12) mit dem Filtergurt (16) verbunden und abgekühlt wird.

12. Verfahren nach Anspruch 11, **dadurch gekennzeichnet, dass** das Einpressen der Drahthaken bei einem Druck von 15 bis 35 N/mm² und/oder das Aufheizen des Abdeckelements bei einem Druck von 0,2 bis 0,6 N/mm² und/oder das Pressen des plastifizierten Materials der Schicht zum Verbinden mit dem Filtergurt (16), insbesondere dem Pressen in die Hohlräume, bei einem Druck von 5 bis 25 N/mm² erfolgt.

13. Verfahren nach einem der Ansprüche 11 bis 12, **dadurch gekennzeichnet, dass** die Plastifizierung des thermoplastischem Materials durch Reibung, Strahlung, Ultraschall, Heizplatten, Heißluft und dgl. erfolgt.

14. Verfahren nach einem der Ansprüche 11 bis 13, **dadurch gekennzeichnet, dass** die aufgebrachte Schicht bis mindestens zur Schmelztemperatur der Schicht aufgewärmt wird, wobei die Schmelztemperatur geringer ist als die Schmelztemperatur des Filtergurts.

## Claims

1. Connection of belt connectors which are configured as wire hooks (1) to an end of a belt (16), wherein the respective wire hook (1) has legs (2, 3) which are disposed on both sides of the belt (16), and hook ends (5) which adjoin said legs (2, 3) and are press-fitted into the belt (16), and a coupling eyelet (4) connecting the two legs (2, 3), furthermore having a planar cover element (10) on both sides of the belt (16) which extends across the width of the belt (16) for the hook assembly (7), wherein the cover element (10) for fastening the cover element (20) to the belt (16) has a carrier material (11) and a layer (12) of a thermoplastic material or an adhesive, in particular a hot-melt adhesive or an elastic adhesive, which is applied to that side of the carrier material that faces the belt (16), **characterized in that** the belt (16) is configured as a filter belt and the applied layer (12) on both sides of the belt (16) penetrates cavities (19) of the belt (16), wherein the applied layer (12) in those regions of the applied layer (12) that are disposed on both sides of the belt (16) is interconnected in the region of the cavities (19) .

2. Connection according to Claim 1, **characterized in that** the belt (16) is composed of plastics, metal, or non-woven material (felt).

3. Connection according to Claim 1 or 2, **characterized in that** the belt (16) is formed from polyester or nylon.

4. Connection according to Claims 1 to 3, **characterized in that** the belt (16) is formed by a woven filter fabric, in particular that the woven filter fabric is formed from monofilament threads and/or spun threads.

5. Connection according to one of Claims 1 to 4, **characterized in that** the applied layer (12) in those regions of the applied layer (12) that are disposed on both sides of the belt (16) are fused to one another in the region of the cavities (19).

6. Connection according to one of Claims 1 to 5, **characterized in that** a further cover element (13) is connected to the cover element (10) on that side of the latter that faces away from the belt (16) .

7. Connection according to Claim 6, **characterized in that** the further cover element (13) extends in the longitudinal direction of the belt (16) across the end regions of the other cover element (13).

8. Connection according to one of Claims 1 to 7, **characterized in that** the carrier material (11) of the cover element (10) and/or of the further cover element (13) is formed by a woven fabric which is formed in particular from monofilament threads and/or spun threads.

9. Connection according to one of Claims 1 to 8, **characterized in that** the carrier material (11) of the cover element (10) and/or of the further cover element (13) is composed of polyester or nylon.

10. Connection according to one of Claims 1 to 9, **characterized in that** the thermoplastic layer is composed of polyurethane.

11. Method for manufacturing a connection of belt connectors which are configured as wire hooks (1) to an end of a belt (16), wherein the respective wire hook (1) has legs (2, 3) which are disposable on both sides of the belt (16), and hook ends (5) which adjoin said legs (2, 3) and are pressfittable into the belt (16), and a coupling eyelet (4) connecting the two legs (2, 3), furthermore having a planar cover element (10) which is disposable on both sides of the belt (16) and extends across the width of the belt (16) for the hook assembly (7), wherein the cover element (10) for fastening the cover element (20) to the belt (16) has a carrier material (11) and a layer (12) of a thermoplastic material or an adhesive, which is applied to that side of the carrier material that faces the belt (16), in particular a method for manufacturing a connection according to one of Claims 1 to 10, **characterized in that** the wire hooks (10) held in the cover element (10) are press-fitted into a belt (16) configured as a filter belt, the applied layer (12) is then heated and plasticized material of the layer (12) is connected under pressure to the filter belt (16), wherein after press-fitting of the wire hooks (1) into the filter belt (16) and subsequent heating of the applied layer (12) the plasticized material of the layer (12) is pressed under pressure into the cavities (19) of the filter belt (16), wherein after press-fitting of the wire hooks (1) having the cover element (10), the cover element (10) is heated under relatively low pressure in a separate station and immediately thereafter plasticized material of the layer (12) in a further station and under relatively high pressure is connected to the filter belt (16) and cooled.

12. Method according to Claim 11, **characterized in that** press-fitting of the wire hooks is performed at a pressure of 15 to 35 N/mm², and/or heating of the cover element is performed at a pressure of 0.2 to 0.6N/mm², and/or pressing the plasticized material of the layer for connection to the filter belt (16), in particular pressing into the cavities, is performed at a pressure of 5 to 25 N/mm².

13. Method according to one of Claims 11 to 12, **characterized in that** plastification of the thermoplastic material is performed by friction, radiation, ultrasound, hot plates, hot air, and the like.

14. Method according to one of Claims 11 to 13, **characterized in that** the applied layer is heated to at least the melting temperature of the layer, the melting temperature being lower than the melting temperature of the filter belt.

## Revendications

1. Assemblage d'éléments de jonction de courroies réalisés sous forme de crochets en fil métallique (1) à une extrémité d'une courroie (16), le crochet en fil métallique respectif (1) présentant des branches (2, 3) disposées de chaque côté de la courroie (16) et des extrémités de crochets (5) se raccordant à ces branches, pressées dans la courroie (16), ainsi qu'un œillet d'accouplement (4) reliant les deux branches (2, 3), et comprenant en outre un élément de recouvrement plat (10) de chaque côté de la courroie (16) pour l'agencement de crochets (7), lequel s'étend sur la largeur de la courroie (16), l'élément de recouvrement (10) présentant un matériau de support (11) et une couche (12) appliquée sur celui-ci sur son côté tourné vers la courroie (16), de matériau thermoplastique ou de colle, en particulier de colle thermocollage, ou de colle élastique pour la fixation de l'élément de recouvrement (20) à la courroie (16), **caractérisé en ce que** la courroie (16) est réalisée sous forme de courroie de filtre et la couche appliquée (12) traverse de chaque côté de la courroie (16) des cavités (19) de la courroie (16), la couche appliquée (12) étant connectée à elle-même dans les régions de la couche appliquée (12) qui sont disposées de chaque côté de la courroie (16) dans la région des cavités (19).

2. Assemblage selon la revendication 1, **caractérisé en ce que** la courroie (16) se compose de plastique, de métal ou de non-tissé (feutre).

3. Assemblage selon la revendication 1 ou 2, **caractérisé en ce que** la courroie (16) est formée de polyester ou de nylon.

4. Assemblage selon les revendications 1 à 3, **caractérisé en ce que** la courroie (16) est formée par un tissu de filtre, en particulier **en ce que** le tissu de filtre est constitué de fils monofilaments et/ou de fils filés.

5. Assemblage selon l'une quelconque des revendications 1 à 4, **caractérisé en ce que** la couche appliquée (12), dans les régions de la couche appliquée (12) qui sont disposées de chaque côté de la courroie (16), est fusionnée à elle-même dans la région des cavités (19).

6. Assemblage selon l'une quelconque des revendications 1 à 5, **caractérisé en ce qu'**un élément de recouvrement supplémentaire (13) est assemblé à l'élément de recouvrement (10) sur son côté opposé à la courroie (16).

7. Assemblage selon la revendication 6, **caractérisé en ce que** l'élément de recouvrement supplémentaire (13) s'étend dans la direction longitudinale de la courroie (16) sur les régions d'extrémité de l'autre élément de recouvrement (13).

8. Assemblage selon l'une quelconque des revendications 1 à 7, **caractérisé en ce que** le matériau de support (11) de l'élément de recouvrement (10) et/ou de l'élément de recouvrement supplémentaire (13) est formé par un tissu qui est formé notamment de fils monofilaments et/ou de fils filés.

9. Assemblage selon l'une quelconque des revendications 1 à 8, **caractérisé en ce que** le matériau de support (11) de l'élément de recouvrement (10) et/ou de l'élément de recouvrement supplémentaire (13) se compose de polyester ou de nylon.

10. Assemblage selon l'une quelconque des revendications 1 à 9, **caractérisé en ce que** la couche thermoplastique se compose de polyuréthane.

11. Procédé de fabrication d'un assemblage d'éléments de jonction de courroies réalisés sous forme de crochets en fil métallique (1) à une extrémité d'une courroie (16), le crochet en fil métallique respectif (1) présentant des branches (2, 3) pouvant être disposées de chaque côté de la courroie (16) et des extrémités de crochets (5) se raccordant à ces branches, pressées dans la courroie (16), ainsi qu'un oeillet d'accouplement (4) reliant les deux branches (2, 3), et comprenant en outre un élément de recouvrement plat (10) pouvant être disposé de chaque côté de la courroie (16) pour l'agencement de crochets (7), lequel s'étend sur la largeur de la courroie (16), l'élément de recouvrement (10) présentant un matériau de support (11) et une couche (12) appliquée sur celui-ci sur son côté tourné vers la courroie (16), de matériau thermoplastique ou de colle pour la fixation de l'élément de recouvrement (20) à la courroie (16), notamment procédé de fabrication d'un assemblage selon l'une quelconque des revendications 1 à 10, **caractérisé en ce que** les crochets en fil métallique (10) retenus dans l'élément de recouvrement (10) sont pressés dans une courroie (16) réalisée sous forme de courroie de filtre, puis la couche appliquée (12) est chauffée et le matériau plastifié de la couche (12) est assemblé sous pression à la courroie de filtre (16), le matériau plastifié de la couche (12) étant pressé sous pression dans des cavités (19) de la courroie de filtre (16) après le pressage des crochets en fil métallique (1) dans la courroie de filtre (16) et le chauffage subséquent de la couche appliquée (12), l'élément de recouvrement (10), après le pressage des crochets en fil métallique (1) avec l'élément de recouvrement (10), étant chauffé dans un poste séparé à une pression relativement faible et immédiatement après, dans un poste supplémentaire, le matériau plastifié de la couche (12) étant assemblé à une pression relativement élevée à la courroie de filtre (16) et étant refroidi.

12. Procédé selon la revendication 11, **caractérisé en ce que** le pressage des crochets en fil métallique s'effectue à une pression de 15 à 35 N/mm² et/ou le chauffage de l'élément de recouvrement s'effectue à une pression de 0,2 à 0,6 N/mm² et/ou le pressage du matériau plastifié de la couche pour l'assemblage à la courroie de filtre (16), en particulier le pressage dans les cavités, s'effectue à une pression de 5 à 25 N/mm².

13. Procédé selon l'une quelconque des revendications 11 à 12, **caractérisé en ce que** la plastification du matériau thermoplastique s'effectue par frottement, rayonnement, ultrasons, plaques chauffantes, air chaud et similaire.

14. Procédé selon l'une quelconque des revendications 11 à 13, **caractérisé en ce que** la couche appliquée est chauffée jusqu'à au moins la température de fusion de la couche, la température de fusion étant inférieure à la température de fusion de la courroie de filtre.
